# FASCICULE DE BREVET EUROPEEN

(11) **EP 2 926 535 B1**
(45) Date de publication et mention de la délivrance du brevet: **17.10.2018**
(21) Numéro de dépôt: 13795807.0
(22) Date de dépôt: 28.11.2013
(51) Int. Cl.: H04M 1/02, G06F 1/16, G07F 7/08, G07F 7/10, A47F 9/02, A47F 10/00, A47F 10/02

(54) **BOITIER DE TERMINAL**
ANSCHLUSSGEHÄUSE
TERMINAL HOUSING

(30) Priorité: 30.11.2012 FR 1261506
(43) Date de publication de la demande: 07.10.2015
(73) Titulaire: Ingenico Group, 75015 Paris (FR)
(72) Inventeur: ANDRE, Jérôme, F-26800 Montoison (FR); JANOT, Cyril, F-26400 Grane (FR)
(74) Mandataire: Vidon Brevets & Stratégie
(86) Numéro de dépôt international: PCT/EP2013/075021
(87) Numéro de publication internationale: WO 2014/083136

(56) Documents cités:
- EP-A1- 1 559 563
- DE-U1-202006 019 287
- US-A1- 2005 141 179
- US-A1- 2007 077 826
- US-A1- 2008 061 058
- US-A1- 2010 011 536
- US-B1- 6 850 767

## Description

### 1. Domaine de l'invention

Le domaine de l'invention est celui des boîtiers de terminaux, et plus particulièrement des boitiers de terminaux de paiement électroniques.

### 2. Art antérieur

Il est fait référence aux documents US2007/077826 A1, US2010/011536 A1, US2008/061058 A1, DE202006019287 U1, US2005/141179 A1, US6850767 B1 et EP1559563 A1.

Les boitiers des terminaux de paiement électroniques actuels présentent en général deux parties, notées capot inférieur et capot supérieur, permettant d'abriter tous les composants et éléments de fonctionnement du terminal (électronique, rouleau papier pour impression,...) et fixées l'une à l'autre par une pluralité de vis.

Le boitier d'un terminal a notamment pour fonction de protéger l'intérieur du terminal, lors de l'utilisation de celui-ci et en particulier lors de chute du terminal. Ainsi, une des contraintes de conception d'un tel boitier, une fois les contraintes liées à l'agencement des composants à abriter dans un espace restreint, réside dans la tenue aux chutes. De plus, de tels boitiers doivent s'adapter à la diminution de la taille des terminaux demandée par les utilisateurs, imposant notamment des contraintes au niveau des fixations par vis, qui peuvent augmenter l'épaisseur du terminal.

Actuellement, la résistance aux chutes est principalement assurée par une augmentation du nombre de vis permettant la fixation des capots entre eux.

Le principal inconvénient de l'ajout de vis réside dans le manque de place pour ces vis, à cause de la diminution de la taille des terminaux, principalement au niveau du rouleau de papier, qui se trouve à une extrémité du terminal, et donc à une jonction entre les capots inférieur et supérieur.

Par ailleurs, il est nécessaire de prévoir une ouverture du boitier, par exemple pour des actions de maintenance sur des composants à l'intérieur du terminal. Un autre inconvénient des boitiers actuels et de la multiplication des vis de fixation est de rendre plus long le démontage du terminal.

Enfin, en raison de la fragilité des fûts de fixation des vis, l'augmentation du nombre de vis ne permet pas toujours de maintenir le boitier fermé lors d'une chute, ou après une chute.

### 3. Objectifs de l'invention

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique permettant de tenir compte des contraintes de taille d'un terminal tout en fournissant un boitier de terminal offrant une résistance optimale aux chutes.

### 4. Exposé de l'invention

L'invention ne présente pas les inconvénients de l'art antérieur.

L'invention se rapporte à un boitier d'un terminal formé d'au moins un capot inférieur et un capot supérieur, selon la revendication 1.

Selon un mode de réalisation particulier, le boitier présente des moyens de fixation articulée des capots inférieur et supérieur l'un à l'autre, les moyens de fixation articulée pouvant prendre au moins une position de fermeture du boitier et une position d'ouverture du boitier, dans laquelle les capots inférieur et supérieur sont solidaires.

Ainsi, l'invention repose sur une approche nouvelle et inventive de la mise en oeuvre d'un boitier de terminal de communication, et plus particulièrement d'un boitier de terminal de paiement électronique, permettant de fixer les parties inférieure et supérieure du boitier de manière articulée, c'est-à-dire mobiles l'une par rapport à l'autre, et solidaires même en position d'ouverture du boitier.

Ainsi, l'invention, selon différents modes de réalisation particuliers, permet d'optimiser la fermeture d'un boitier de terminal en utilisant des moyens de fixation articulée permettant aux deux parties du boitier de rester solidaires lors du passage d'une position fermée à une position ouverte, facilitant ainsi la manipulation du boitier lors de la maintenance par exemple.

De plus, ces moyens de fixation articulée permettent de s'affranchir de l'utilisation de vis supplémentaire(s), qui augmenteraient la taille du terminal, tout en assurant une fermeture efficace du boitier en cas de chute du terminal. En effet, ces moyens de fixation articulée présentent une certaine souplesse permettant de ne pas casser et donc permettant au boitier de rester fermé lors d'une chute, contrairement aux moyens de fixation par vis qui se détériorent lors d'une chute, soit parce que les vis se cassent, soit parce que les parties des capots autour des vis se cassent ou se fêlent, entrainant fréquemment l'ouverture du boitier lors d'une chute. Par ailleurs, ces moyens de fixation articulée présentent plus de facilité à mettre au point, lors des phases de conception du boitier, que des fixation par vis, les pièces à mettre au point étant en plastique alors que les vis étant des éléments du commerce sont plus difficiles à modifier.

Selon un mode de réalisation particulier, les moyens de fixation articulée sont mis en oeuvre par un axe de rotation traversant le capot inférieur dans sa largeur et présentant deux extrémités au niveau desquelles se fixe le capot supérieur.

Ainsi, selon ce mode de réalisation particulier de l'invention, le capot supérieur du boitier vient se fixer sur le capot inférieur au niveau de deux extrémités d'un axe de rotation traversant le capot inférieur dans sa largeur, permettant ensuite au capot inférieur de pivoter, autour de cet axe de rotation, par rapport au capot supérieur (et vice versa).

De cette manière, les deux capots restent solidaires l'un de l'autre autant dans les positions ouverte et fermée du boitier, que dans les positions intermédiaires entre l'ouverture et la fermeture.

De plus, ces moyens de fixation formés par un axe de rotation présentent une meilleure solidité et résistance aux chutes que des moyens de fixation actuels par vis par exemple.

En particulier, le capot supérieur se fixe sur le capot inférieur par déformation d'au moins un desdits capots et orientation des capots l'un par rapport à l'autre selon un angle prédéterminé.

Ainsi, par exemple, le capot supérieur se fixe au capot inférieur, par l'intermédiaire des deux extrémités de l'axe de rotation, par déformation du capot supérieur permettant ainsi de maintenir solidaire les deux capots, sans nécessité d'autres moyens. En effet, le capot supérieur doit être « clipsé » au capot inférieur en « forçant » l'insertion du capot inférieur, de sorte que le capot supérieur reste fixé lorsqu'il reprend sa forme « normale ».

De cette manière, aucun outil n'est nécessaire pour emboiter le capot supérieur sur le capot inférieur.

Par ailleurs, non seulement le capot supérieur est déformé lors de la fixation, mais le capot inférieur est incliné de façon à s'insérer d'abord à une extrémité de l'axe de rotation, puis à l'autre extrémité. Ainsi, la désolidarisation des deux capots ne peut être effectuée de manière aisée, renforçant la résistance aux chutes.

Selon une caractéristique particulière de l'invention, au moins une des extrémités de l'axe de rotation présente des moyens de verrouillage du capot supérieur au capot inférieur.

Ainsi, selon ce mode de réalisation particulier de l'invention, une fois le capot supérieur « clipsé » sur le capot inférieur, par déformation, des moyens de verrouillage permettent de fournir une sécurité supplémentaire de fixation des deux capots, en position fermée.

De cette manière, il ne suffit pas de déformer à nouveau, dans l'autre sens, le capot supérieur pour le détacher du capot inférieur, mais il est d'abord nécessaire d'actionner les moyens de verrouillage en ouvrant le boitier.

Ce mode de réalisation permet donc également de renforcer la résistance aux chutes.

Selon un aspect particulier de l'invention, les moyens de verrouillage sont destinés à coopérer avec des moyens de blocage sur le capot supérieur pour prendre au moins une position de verrouillage des capots l'un à l'autre et une position de déverrouillage des capots l'un à l'autre.

Ainsi, selon ce mode de réalisation particulier de l'invention, les moyens de verrouillage situés à l'extrémité de l'axe de rotation sur le capot inférieur sont associés à des moyens de blocage situés sur le capot supérieur, permettant, une fois le capot supérieur « clipsé » sur le capot inférieur, de verrouiller la fixation des deux capots l'un à l'autre, par exemple en fermant le boitier.

Pour déverrouiller, il suffit alors d'ouvrir le boitier.

De cette manière, le verrouillage de la fixation des capots l'un à l'autre peut se faire d'un geste simple, sans outil supplémentaire. Par ailleurs, ce verrouillage optimise encore la résistance aux chutes d'un tel boitier de terminal.

Par exemple, les moyens de verrouillage consistent en un verrou présentant au moins un logement intérieur et les moyens de blocage consistent en une cavité présentant au moins une excroissance destinée à s'insérer dans le logement du verrou pour le bloquer.

Ainsi, selon ce mode de réalisation particulier de l'invention, les moyens de verrouillage consistent en un verrou à l'extrémité de l'axe de rotation sur le capot inférieur qui opère par exemple un quart de tour lorsque l'on ferme le boitier, le verrou venant se bloquer dans des moyens de blocage prévus sur le capot supérieur, au niveau de la fixation sur le capot inférieur.

Par exemple, ces moyens de blocage consistent en un creux, ou un trou, au niveau des deux parties du capot supérieur qui viennent se fixer sur le capot inférieur, ce creux/trou présentant à l'intérieur une ou plusieurs excroissances s'insérant dans un ou plusieurs logements prévus à l'intérieur du verrou, assurant ainsi le blocage, ou le verrouillage des moyens de fixation articulée.

Selon une caractéristique particulière de l'invention, les moyens de verrouillage présentent des moyens d'attache d'un cordon.

Ainsi, selon ce mode de réalisation particulier de l'invention, les moyens de verrouillage servent également à faire passer un cordon, tel qu'une dragonne par exemple, pour une utilisation mobile du terminal.

De cette manière, deux fonctionnalités (verrouillage de la fixation des deux capots du boitier et passage d'un cordon) sont assurées par les mêmes moyens, optimisant ainsi la fabrication du boitier du terminal et la compacité de celui-ci.

Selon un mode de réalisation particulier de l'invention, l'axe de rotation est situé à une extrémité du capot inférieur présentant un logement pour un rouleau de papier.

Ainsi, selon ce mode de réalisation particulier de l'invention, l'axe de rotation servant à la fixation des deux capots est situé dans un espace prévu pour le logement du rouleau de papier, de manière à minimiser la place nécessaire à ce système de fixation selon l'invention. En effet, la taille du logement prévu pour le rouleau de papier peut être légèrement augmentée, pour accueillir l'axe de rotation, sans que l'ergonomie du terminal de s'en trouve sensiblement modifiée.

De plus, cet endroit du terminal est habilement choisi pour faire pivoter les deux capots l'un par rapport à l'autre, car il se trouve à une extrémité du terminal et permet donc une position d'ouverture optimale du boitier pour toute opération de maintenance par exemple.

Enfin, actuellement, sur certains terminaux, c'est à cet endroit (au niveau du logement du rouleau de papier, sur l'un ou l'autre des côtés du boitier) que sont prévus des moyens d'attache d'un cordon, comme une dragonne par exemple, qui peuvent donc être conservés selon ce mode de réalisation de l'invention, comme décrit ci-dessus.

L'invention concerne également un terminal comprenant un boitier tel que décrit précédemment.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente une vue de côté d'un boitier d'un terminal selon un mode de réalisation particulier de l'invention ;
- la figure 2 présente une vue arrière d'un boitier d'un terminal selon un mode de réalisation particulier de l'invention ;
- la figure 3 présente une vue du dessus d'un boitier d'un terminal selon un mode de réalisation particulier de l'invention ;
- les figures 4a à 4c présentent un exemple de moyens de verrouillage et de moyens de blocage des moyens de fixation articulée selon un mode de réalisation de l'invention.

### 6. Description d'un mode de réalisation de l'invention

### 6.1 Principe général

Le principe général de l'invention repose sur l'utilisation de moyens de fixation articulée pour fixer les deux parties (capots inférieur et supérieur) d'un boitier de terminal, de façon à renforcer la résistance aux chutes du boîtier tout en respectant les contraintes de taille réduite du terminal.

Ainsi, l'utilisation de tels moyens de fixation articulée permet de s'affranchir de l'utilisation de vis supplémentaires pour assurer une bonne fermeture du boitier, tout en assurant une résistance optimale à la chute du terminal.

Ces moyens de fixation articulée permettent également de garder solidaires les capots inférieur et supérieur même en position ouverte, ce qui facilite la maintenance du terminal notamment. En particulier, les deux capots restant solidaires, l'étiquette d'identification, classiquement collée au capot inférieur, reste elle aussi solidaire du capot supérieur.

### 6.2 Description d'un mode de réalisation

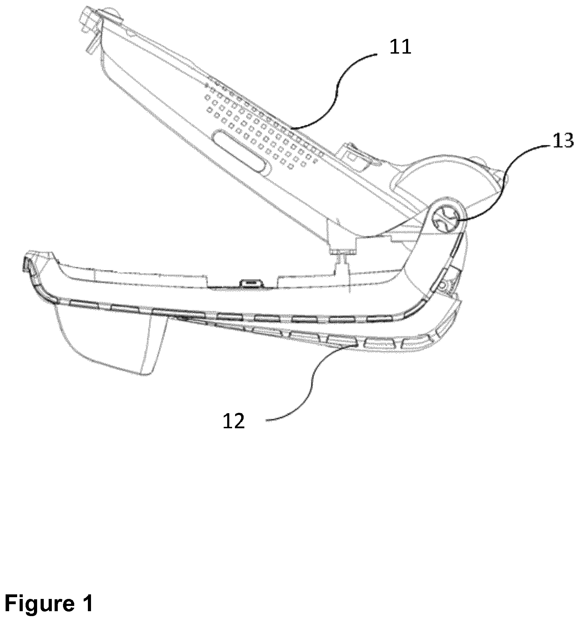

Selon un mode de réalisation particulier de l'invention, illustré notamment par les figures 1 à 3, le boitier du terminal est composé de deux parties 11 et 12, respectivement notées capot inférieur et capot supérieur fixés l'un à l'autre par des moyens de fixation articulée 13, partiellement illustrés sur la figure 1.

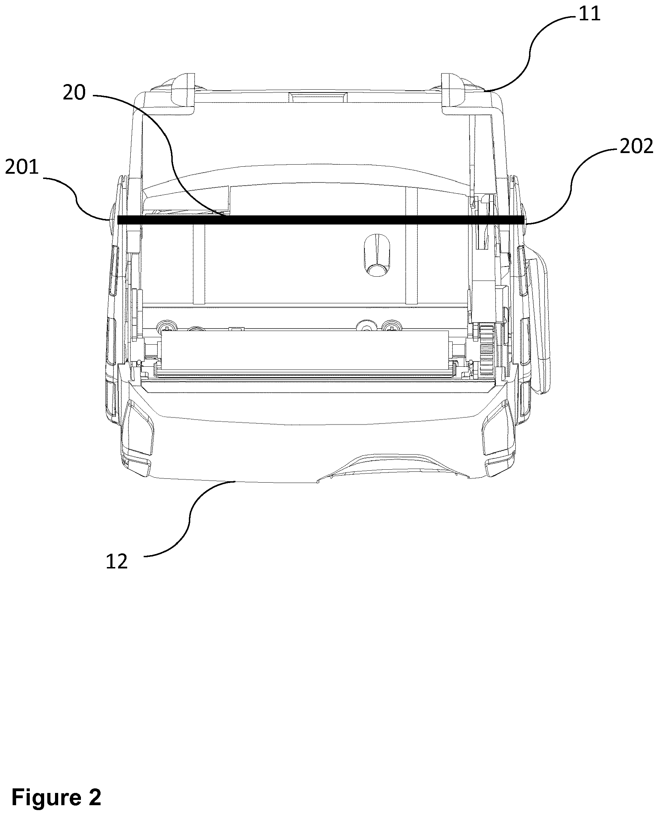

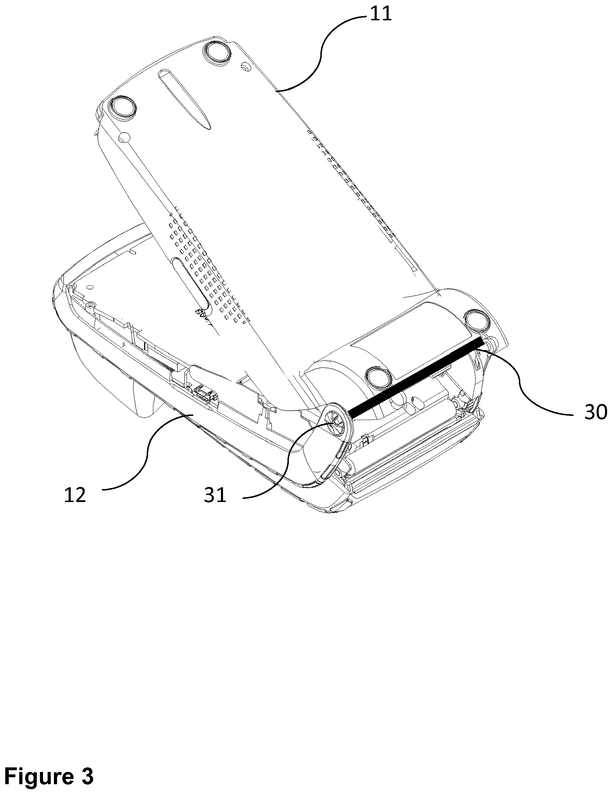

En particulier, selon ce mode de réalisation particulier de l'invention, les moyens de fixation articulée 13 sont constitués par un axe de rotation (20, 30) (illustré en figures 2 et 3) intégré au capot inférieur 11, par exemple au niveau du logement du rouleau de papier. Cet axe de rotation peut, selon différentes variantes de ce mode de réalisation, être placé à d'autres endroits du capot inférieur, en fonction par exemple de l'agencement des composants à l'intérieur du terminal.

Cet axe de rotation traverse le capot inférieur 11 dans sa largeur et ses deux extrémités 201 et 202 correspondent aux points de fixation du capot supérieur 12.

Ainsi, une fois fixés l'un à l'autre, les deux capots sont solidaires et mobiles l'un par rapport à l'autre, selon l'axe de rotation (20, 30).

De cette manière, lorsque, pour des raisons de maintenance, le boitier du terminal doit être ouvert, le capot supérieur 12 peut rester fixé au capot inférieur 11, tout en permettant l'accès aux composants/éléments internes du terminal.

De plus, ces moyens de fixation articulée 13 se distinguent de l'utilisation de vis par leur meilleure résistance à la chute du terminal, due notamment à l'élasticité intrinsèque de ces moyens, contrairement aux fûts de fixation des vis qui peuvent casser lors d'une chute.

Enfin, ces moyens de fixation articulée 13 n'ont que peu d'impact sur la taille du boitier, et donc du terminal, l'axe de rotation étant habilement intégré à une partie du boitier prévue pour loger le rouleau de papier et donc n'impactant pas l'épaisseur du boitier.

Par ailleurs, ces moyens de fixation articulée 13 permettent une fermeture fiable du boitier, d'une part grâce au principe même d'insertion du capot inférieur 11 sur le capot supérieur 12, et d'autre part grâce à des moyens de verrouillage prévus sur l'une et/ou l'autre des extrémités (201, 202) de l'axe de rotation, détaillés ci-dessous.

En effet, le principe même de fixation des deux capots prévoit un « clipsage » du capot supérieur 12 sur le capot inférieur 11, au niveau des extrémités (201, 202) de l'axe de rotation (20, 30), par déformation du capot supérieur 12 pour insérer le capot inférieur 11.

Cette insertion est effectuée en deux temps, et le capot inférieur 11 est de préférence incliné par rapport au capot supérieur 12, de façon à limiter la résistance au moment de l'insertion. Ainsi, le capot supérieur 12est d'abord fixé sur une extrémité de l'axe de rotation du capot inférieur, puis sur l'autre extrémité, en « forçant » l'insertion, de telle sorte que le capot supérieur 12, lorsqu'il retrouve sa forme initiale une fois fixé, est « plaqué » sur le capot inférieur 11, assurant ainsi une fixation solide.

Il est à noter que ces moyens de fixation articulée 13 ne nécessitent pas d'outil ou de matériel supplémentaire pour fixer les capots l'un à l'autre, contrairement à l'utilisation de vis.

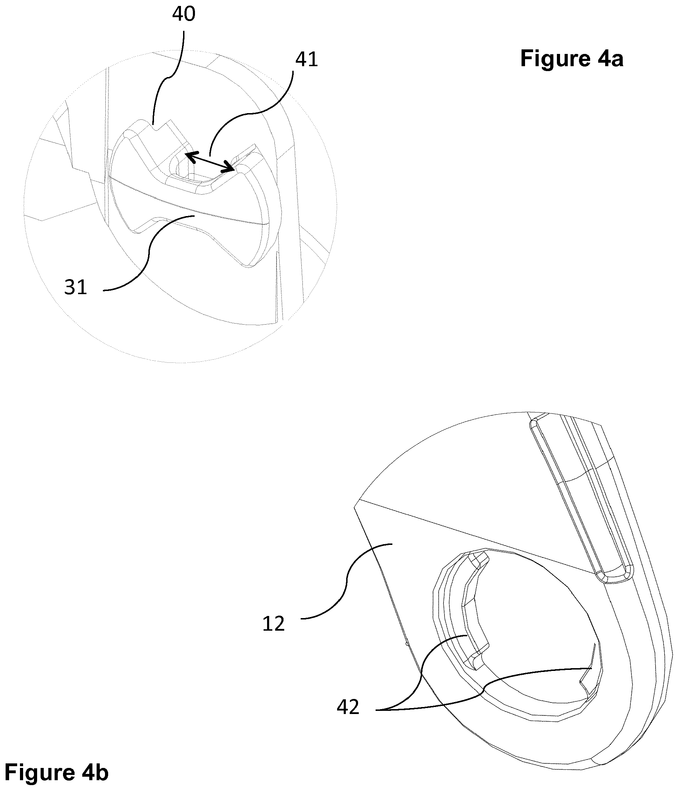

De plus, comme indiqué ci-dessus, ce mode de réalisation particulier de l'invention prévoit des moyens de verrouillage 31 (illustrés notamment en figure 3, et 4a à 4c), sur l'une et/ou l'autre des extrémités de l'axe de rotation, associés à des moyens de blocage 42 (figures 4b) sur le capot supérieur 12, permettant d'une part de maintenir fermé le boitier et d'autre part d'empêcher un retrait du capot inférieur par simple déformation inverse, lorsque le boitier est fermé.

Par exemple, les moyens de verrouillage 31 consistent en une sorte de verrou opérant un quart de tour lorsque l'on ferme le boitier, une fois les deux capots fixés l'un à l'autre, et venant se bloquer dans des moyens de blocage 42 prévus sur le capot supérieur 12, au niveau de sa fixation au capot inférieur 11.

Par exemple, comme illustré en figure 4a, le verrou 31 comporte un ou plusieurs logements 40, destinés à coopérer, lors de la fermeture du boitier, avec des moyens de blocage 42 prévus sur le capot supérieur 12.

Par exemple, comme illustré en figure 4b, les moyens de blocage 42 consistent en deux excroissances, à l'intérieur d'un trou prévu au niveau de la fixation du capot supérieur 12 sur le capot inférieur 11, destinées à s'insérer dans les logements 40 des moyens de verrouillage 31.

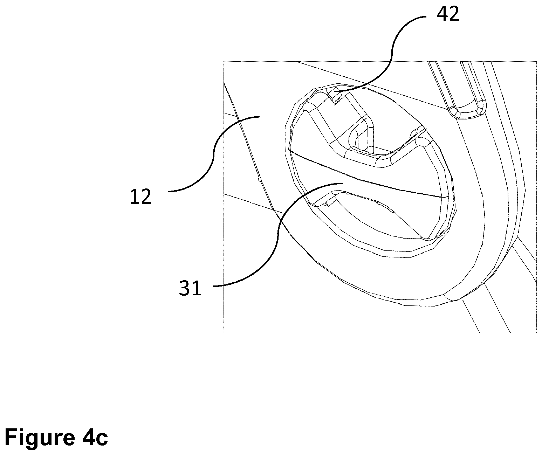

La figure 4c illustre cette situation de blocage des moyens de fixation articulée 13 selon ce mode de réalisation de l'invention, par coopération des moyens de verrouillage 31 avec les moyens de blocage 42.

De cette manière, lors d'une chute notamment, le boitier est maintenu fermé.

Il est à noter là encore que cette coopération des moyens de verrouillage avec les moyens de blocage ne nécessite pas d'outil ou de matériel supplémentaire pour verrouiller la fixation des capots l'un à l'autre.

Avantageusement, selon une variante de ce mode de réalisation illustrée en figure 4a, les moyens de verrouillage assurent également la fonction d'attache d'un cordon, par exemple pour une utilisation mobile du terminal. En effet, il est utile de pouvoir sécuriser la mobilité du terminal par un cordon, ou une dragonne, passé autour du poignet (ou autour du cou, dans le cas d'une attache sur les deux côtés) et permettant au terminal de ne pas tomber lorsque l'utilisateur le lâche malencontreusement. Cette fonctionnalité connue sur certains terminaux existants est ici avantageusement intégrée aux moyens de verrouillage prévus sur l'une et/ou l'autre des extrémités de l'axe de rotation des moyens de fixation des capots du boitier.

Ainsi, les moyens de verrouillage 31 comportent un passage 41 destiné à insérer une dragonne.

Pour renforcer la solidité de ce passage 41, lors de l'utilisation mobile du terminal, il est prévu plusieurs logements 40, permettant de répartir les efforts sur les pièces et ainsi éviter une déformation voire même une casse de pièces.

## Revendications

1. **Boitier** d'un terminal formé d'au moins un capot inférieur (11) et un capot supérieur (12), ledit boitier présente des moyens de fixation articulée (13) reliant lesdits capots inférieur (11) et supérieur (12) l'un à l'autre, lesdits moyens de fixation articulée étant adaptés pour prendre au moins une position de fermeture du boitier et une position d'ouverture du boitier, dans laquelle lesdits capots inférieur (11) et supérieur (12) sont solidaires, lesdits moyens de fixation articulée (13) sont mis en oeuvre par un axe de rotation (20, 30) traversant ledit capot inférieur (11) dans sa largeur et présentant deux extrémités (201, 202) au niveau desquelles se fixe ledit capot supérieur (12), et au moins une desdites extrémités (201, 202) dudit axe de rotation (20, 30) présente des moyens de verrouillage (31) dudit capot supérieur (12) audit capot inférieur (11), et lesdits moyens de verrouillage (31) sont adaptés à coopérer avec des moyens de blocage (42) sur ledit capot supérieur (12) pour prendre au moins une position de verrouillage desdits capots l'un à l'autre et une position de déverrouillage desdits capots l'un à l'autre.

2. **Boitier** selon la revendication 1, **caractérisé en ce que** ledit capot supérieur (12) se fixe sur ledit capot inférieur (11) par déformation d'au moins un desdits capots et orientation desdits capots l'un par rapport à l'autre selon un angle prédéterminé.

3. **Boitier** selon la revendication 1, **caractérisé en ce que** lesdits moyens de verrouillage (31) consistent en un verrou présentant au moins un logement intérieur (40) et lesdits moyens de blocage (42) consistent en une cavité présentant au moins une excroissance adaptée à s'insérer dans ledit au moins un logement (40) dudit verrou pour le bloquer.

4. **Boitier** selon la revendication 1, **caractérisé en ce que** lesdits moyens de verrouillage (31) présentent des moyens d'attache d'un cordon (41).

5. **Boitier** selon la revendication 1, **caractérisé en ce que** ledit axe de rotation (20, 30) est situé à une extrémité dudit capot inférieur (11) présentant un logement pour un rouleau de papier.

6. **Terminal** comprenant un boitier selon l'une quelconque des revendications 1 à 5.

## Patentansprüche

1. Anschlussgehäuse, das von mindestens einer unteren Kappe (11) und einer oberen Kappe (12) gebildet ist, wobei das Gehäuse Mittel zur gelenkigen Befestigung (13) aufweist, die die untere Kappe (11) und obere Kappe (12) miteinander verbinden, wobei die Mittel zur gelenkigen Befestigung geeignet sind, mindestens eine Verschlussposition des Gehäuses und eine Öffnungsposition des Gehäuses einzunehmen, in der die untere (11) und die obere (12) Kappe verbunden sind, wobei die Mittel zur gelenkigen Befestigung (13) durch eine Drehachse (20, 30) eingesetzt werden, die durch die untere Kappe (11) in ihrer Breite hindurchgeht und zwei Enden (201, 202) aufweist, in deren Bereich die obere Kappe (12) befestigt wird, und wobei mindestens eines der Enden (201, 202) der Drehachse (20, 30) Verriegelungsmittel (31) der oberen Kappe (12) an der unteren Kappe (11) aufweist, und wobei die Verriegelungsmittel (31) geeignet sind, mit Feststellungsmitteln (42) auf der oberen Kappe (12) zusammenzuwirken, um mindestens eine Verriegelungsposition der Kappen aneinander und eine Entriegelungsposition der Kappen voneinander einzunehmen.

2. Gehäuse nach Anspruch 1, **dadurch gekennzeichnet, dass** die obere Kappe (12) auf der unteren Kappe (11) durch Verformung mindestens einer der Kappen und Ausrichtung der Kappen zueinander in einem vorbestimmten Winkel befestigt wird.

3. Gehäuse nach Anspruch 1, **dadurch gekennzeichnet, dass** die Verriegelungsmittel (31) in einem Riegel bestehen, der mindestens eine innere Aufnahme (40) aufweist, und dass die Feststellungsmittel (42) in einem Hohlraum bestehen, der mindestens eine Ausstülpung aufweist, die geeignet ist, sich in die mindestens eine Aufnahme (40) des Riegels einzufügen, um ihn festzustellen.

4. Gehäuse nach Anspruch 1, **dadurch gekennzeichnet, dass** die Verriegelungsmittel (31) Mittel zur Befestigung eines Kabels (41) aufweisen.

5. Gehäuse nach Anspruch 1, **dadurch gekennzeichnet, dass** die Drehachse (20 30) an einem Ende der unteren Kappe (11) angeordnet ist, das eine Aufnahme für eine Papierrolle aufweist.

6. Endgerät, umfassend ein Gehäuse nach einem der Ansprüche 1 bis 5.

## Claims

1. **Case** for a terminal, formed by at least one lower cover (11) and one upper cover (12), said case has means (13) for hinged fastening linking said lower cover (11) and upper cover (2) to each other, said means for hinged fastening being adapted to taking at least one position of closure of the case and one position of opening of the case, in which said lower cover (11) and upper cover (12) are fixedly attached,
said means (13) for hinged fastening are implemented by a rotation shaft (20, 30) passing through said lower cover (11) in its width and having two ends (201, 202) at which said upper cover (12) is fixed,
and at least one of said ends (201, 202) of said rotation shaft (20, 30) have means for locking (31) said upper cover (12) to said lower cover (11),
and said means for locking (31) are adapted to cooperating with blocking means (42) on said upper cover (12) to take at least one position for locking said covers to each other and a position for unlocking said covers from each other.

2. **Case** according to claim 1,
**characterized in that** said upper cover (12) gets fixed to said lower cover (11) by deformation of at least one of said covers and orientation of said covers relative to each other at a predetermined angle.

3. **Case** according to claim 1, **characterized in that** said locking means (31) consist of a lock having at least one interior recess (40) and said blocking means (42) consist of a cavity having at least one protrusion adapted to getting inserted into said at least one recess (40) of said lock to block it.

4. **Case** according to claim 1, **characterized in that** said locking means (31) have a means for attaching a cord (41).

5. **Case** according to claim 1, **characterized in that** said rotation shaft (20, 30) is situated at said one end of said lower cover (11) that has a housing for a roll of paper.

6. **Terminal** comprising a case according to any one of the claims 1 to 5.
